# EUROPEAN PATENT APPLICATION

(11) **EP 3 817 161 A1**
(43) Date of publication of application: **05.05.2021**
(21) Application number: 19825590.3
(22) Date of filing: 20.06.2019
(51) Int. Cl.: H01S 3/0941

(54) **LIGHT SOURCE DEVICE AND OPTICAL AMPLIFIER**

(30) Priority: 28.06.2018 JP 2018122973
(71) Applicant: NEC Corporation, 108-8001 Tokyo (JP)
(72) Inventor: TAKEUCHI Takeshi, Tokyo 108-8001 (JP)
(74) Representative: Reeve, Nicholas Edward
(86) International application number: PCT/JP2019/024511
(87) International publication number: WO 2020/004224

(57) **Abstract**

Provided are a light source device that is suitable for an optical amplifier including a plurality of optical amplification units and that can emit excitation light of optimal intensity to each of the optical amplification units, and an optical amplifier that uses this light source device. The light source device includes: first and second light sources that each emit excitation light; and a polarization beam combiner that includes first and second input ports and first and second output ports and that multiplexes/demultiplexes the pumping light emitted from the first and second light sources and inputted to the first and second input ports.

## Description

### [Technical Field]

The present invention relates to a light source device and an optical amplifier, and more particularly to a light source device for outputting pumping light and an optical amplifier using the light source device.

### [Background Art]

In an optical communication system, a fiber type optical amplifier is used in order to amplify an attenuated optical signal. As the fiber type optical amplifier for amplifying an attenuated optical signal, there is a fiber type optical amplifier that amplifies signal intensity of an optical signal by inputting, to a rare-earth-doped fiber to which the optical signal is input, pumping light output from a pumping light source. Such a fiber type amplifier has high efficiency and high gain, and is used as an amplifier for relaying an optical signal in an optical fiber communication system.

Patent Literature 1 (PTL1) to Patent Literature 4 (PTL4) propose an optical amplifier as described above and a pumping light source for outputting pumping light for use in the optical amplifier.

### [Citation List]

### [Patent Literature]

[PTL1] Japanese Patent Application Laid-Open No. 2014-6298
[PTL2] Japanese Patent Application Laid-Open No. 2013-4667
[PTL3] Japanese Patent Application Laid-Open No. 2004-104473
[PTL4] Japanese Patent Application Laid-Open No. Hei8-304860

### [Summary of Invention]

### [Technical Problem]

However, the above-described light source device and optical amplifier have an issue as follows.

The issue is that, in a configuration of an optical amplifier including a plurality of optical amplification units, when intensity of pumping light required by the plurality of optical amplification units differs for each of the optical amplification units, it is difficult that pumping light having optimal intensity is made incident on each of the optical amplification units.

PTL1 to PTL4 make no mention of an optical amplifier configuration including a plurality of optical amplifiers, and do not relate to making pumping light having optimal intensity incident on each of the optical amplifiers when intensity of pumping light required by the plurality of optical amplifiers differs for each of the optical amplifiers in such an optical amplifier configuration.

An object of the present invention is to provide a light source device that is suitable for an optical amplifier including a plurality of optical amplification units and in which pumping light having optimal intensity can be made incident on each of the plurality of optical amplification units, and an optical amplifier using the light source device.

### [Solution to Problem]

In order to accomplish the object, a light source device according to the present invention includes a first light source and a second light source that output pumping light, and a polarized beam combiner in which a first input port, a second input port, a first output port, and a second output port are included and the pumping light from the first light source and the second light source is input to the first input port and the second input port and is multiplexed/demultiplexed.

An optical amplifier according to the present invention includes the light source device, and a first optical amplification unit and a second amplification unit that amplify an optical signal by respectively using the pumping light from the first output port and the second output port of the polarized beam combiner.

### [Advantageous Effects of Invention]

According to the present invention, a light source device in which pumping light having optimal intensity is made incident on each of a plurality of optical amplification units of an optical amplifier can be achieved.

### [Brief Description of Drawings]

[Fig. 1A] Fig. 1A is a configuration diagram for illustrating a light source device according to an example embodiment.
[Fig. 1B] Fig. 1B is a configuration diagram for illustrating an optical amplifier according to a first example embodiment.
[Fig. 1C] Fig. 1C is an explanatory diagram for illustrating an operation of a light source device according to the first example embodiment.
[Fig. 1D] Fig. 1D is an explanatory diagram for illustrating the operation of the light source device according to the first example embodiment.
[Fig. IE] Fig. 1E is an explanatory diagram for illustrating the operation of the light source device according to the first example embodiment.
[Fig. 2A] Fig. 2A is a configuration diagram for illustrating a light source device and an optical amplifier according to a second example embodiment.
[Fig. 2B] Fig. 2B is an explanatory diagram for illustrating an operation of the light source device according to the second example embodiment.
[Fig. 2C] Fig. 2C is an explanatory diagram for illustrating the operation of the light source device according to the second example embodiment.
[Fig. 2D] Fig. 2D is an explanatory diagram for illustrating the operation of the light source device according to the second example embodiment.

### [Example Embodiment]

Desirable example embodiments of the present invention are described in detail with reference to the drawings.

### (First example embodiment)

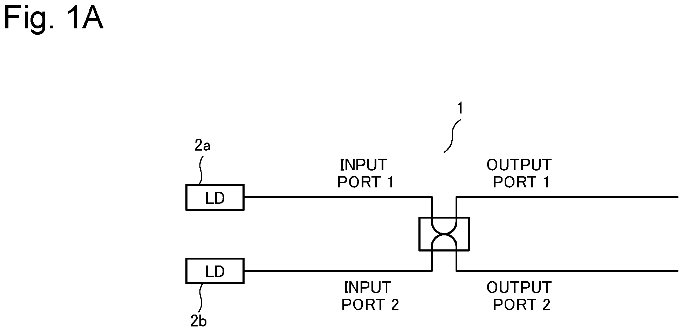

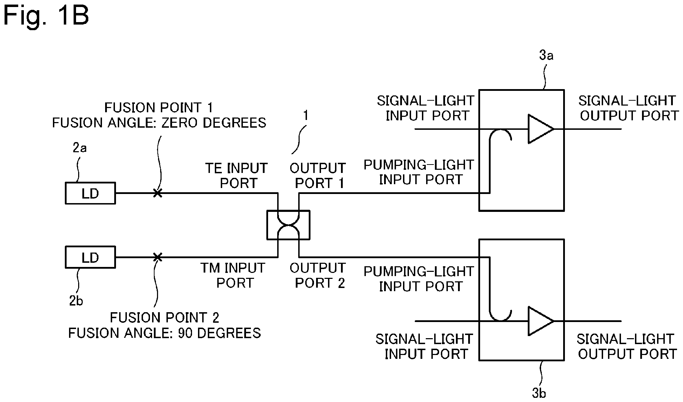

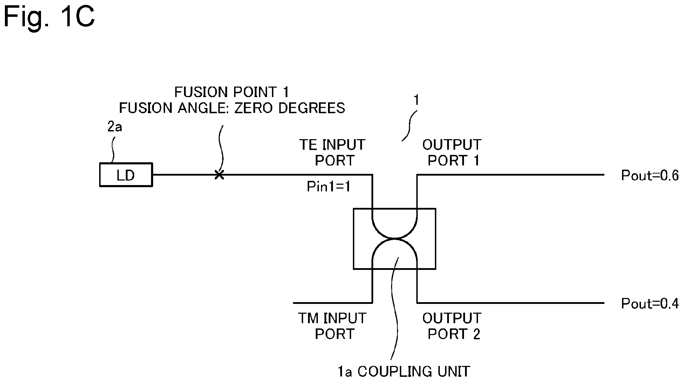

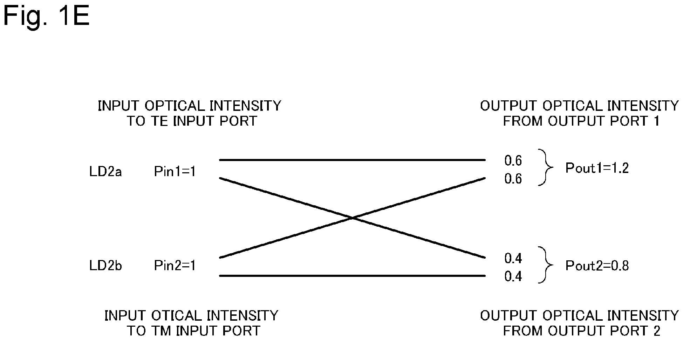

First, a light source device and an optical amplifier according to a first example embodiment are described. Fig. 1A is a configuration diagram for illustrating the light source device according to the first example embodiment. Fig. 1B is a configuration diagram for illustrating the optical amplifier according to the first example embodiment. Figs. 1C to 1E are explanatory diagrams for illustrating an operation of the light source device according to the first example embodiment.

### (Configuration of example embodiment)

The light source device in Fig. 1A includes a laser diode (LD) 2a and a laser diode (LD) 2b as one example of a first light source and a second light source for outputting pumping light, and a polarized beam combiner (PBC) 1 in which an input port 1, an input port 2, an output port 1, and an output port 2 are included and the pumping light from the LD 2a and the LD 2b is input to the input port 1 and input port 2 and multiplexed/demultiplexed. After performing multiplexing/demultiplexing on the pumping light emitted from the LD 2a and pumping light emitted from the LD 2b, the PBC 1 distributes the pumping light to a plurality of rare-earth-doped fibers of later-described fiber type optical amplifiers.

The optical amplifier in Fig. 1B is configured more specifically by using the light source device in Fig. 1A. The optical amplifier in Fig. 1B includes the light source device in Fig. 1A, and an erbium-doped fiber type optical amplification unit (EDFA) 3a and an erbium-doped fiber type optical amplification unit (EDFA) 3b as one example of a first optical amplification unit and a second optical amplification unit for amplifying an optical signal by respectively using the pumping light from the output port 1 and the output port 2 of the PBC 1 of the light source device.

Note that, in the optical amplifier in Fig. 1B, the input port 1 of the PBC 1 in Fig. 1A is a transverse electric wave (TE) input port, and the input port 2 of the PBC 1 in Fig. 1A is a transverse magnetic wave (TM) input port. Herein, output fibers of the LDs 2a and 2b and fibers of the TE and TM input ports of the PBC 1 are both polarization maintaining fibers.

Further, in the optical amplifier in Fig. 1B, a fiber fusion angle between the LD 2a and the TE input port of the PBC 1 at a fusion point 1 is zero degrees, and a fiber fusion angle between the LD 2b and the TM input port of the PBC 1 at a fusion point 2 is 90 degrees. In other words, the output fiber of the LD 2a and the fiber of the TE input port of the PBC 1 are fused together at the fusion point 1, and an angle between slow-axes of the fusion-spliced fibers is zero degrees. Further, the output fiber of the LD 2b and the fiber of the TM input port of the PBC 1 are fused together at the fusion point 2, and an angle between slow-axes of the fusion-spliced fibers is 90 degrees.

The PBC 1 includes a coupling unit 1a having a structure in which cores of two fibers are in close proximity to each other, which is illustrated in Figs. 1C and ID, and thereby multiplexes/demultiplexes pumping light input to the TE and TM input ports. Intensity ratio of pumping light emitted from the two output ports of the PBC 1 can be varied by design of the coupling unit 1a. Specifically, a distance between the cores in close proximity to each other in the coupling unit 1a, a length of a section in which the cores are in close proximity in the coupling unit 1a, refractive index and cross-sectional size of the cores in the coupling unit 1a, and refractive index of a cladding in the coupling unit 1a are used as parameters in designing.

In the EDFAs 3a and 3b, pumping light incident from the light source device on each pumping-light input port amplifies signal light incident on a signal-light input port, and the amplified signal light is output from a signal-light output port.

### (Operation of example embodiment)

An operation of the optical amplifier and the light source device in Fig. 1B is described with reference to Figs. 1C, ID, and IE. The pumping light emitted from the LDs 2a and 2b is input to the input ports 1 and 2 of the PBC 1 and is multiplexed/demultiplexed, and then input to each pumping-light input port of the EDFAs 3a and 3b. On the other hand, an optical signal input to each signal-light input port of the EDFAs 3a and 3b is amplified, in the EDFAs 3a and 3b, by power of the pumping light, and output from each signal-light output port.

As illustrated in Fig. 1C, with regard to the pumping light input from the LD 2a to the TE input port of the PBC 1, distribution is performed at a ratio of 0.6:0.4, and the distributed pumping light is emitted from the output ports 1 and 2 of the PBC 1. Specifically, with regard to optical intensity Pᵢₙ₁ = 1 to the TE input port of the PBC 1, distribution is performed in such a way that optical intensity from the output port 1 of the PBC 1 is Pₒᵤₜ = 0.6 and optical intensity from the output port 2 is Pₒᵤₜ = 0.4.

As illustrated in Fig. ID, with regard to the pumping light input from the LD 2b to the TM input port of the PBC 1, distribution is performed at a ratio of 0.6:0.4, and the distributed pumping light is emitted from the output ports 1 and 2 of the PBC 1. Specifically, with regard to optical intensity Pᵢₙ₂ = 1 to the TM input port of the PBC 1, distribution is performed in such a way that optical intensity from the output port 1 of the PBC 1 is Pₒᵤₜ = 0.6 and optical intensity from the output port 2 is Pₒᵤₜ = 0.4.

### (Advantageous effect of example embodiment)

Thus, in the light source device according to the present example embodiment, pumping light having different optical intensities can be made incident on each of the EDFAs 3a and 3b of the optical amplifier in Fig. 1B. Pumping light having different optical intensities can be made incident to each of the EDFAs 3a and 3b of the optical amplifier in Fig. 1B as described above, and therefore, in an optical amplifier configured in such a way as to include a plurality of EDFAs, pumping light having optimal intensity can be made incident on each of the EDFAs.

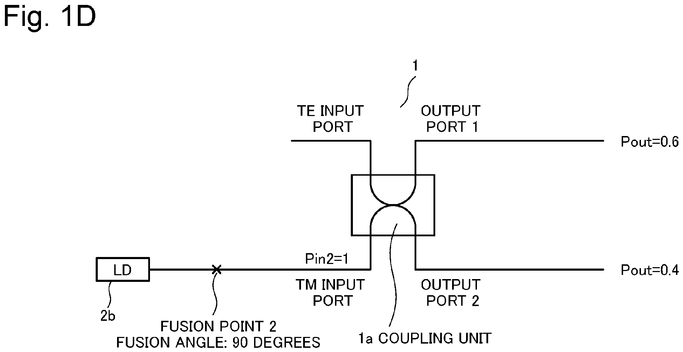

When the distribution of the pumping light input from the LD 2a to the TE input port of the PBC 1 as illustrated in Fig. 1C and the distribution of the pumping light input from the LD 2b to the TE input port of the PBC 1 as illustrated in Fig. 1D are put together, the distribution is illustrated as in Fig. IE. With regard to the input optical intensity Pᵢₙ₁ = 1 from the LD 2a to the TE input port of the PBC 1 and the input optical intensity Pᵢₙ₂ = 1 from the LD 2b to the TM input port of the PBC 1, output optical intensity from the output port 1 of the PBC 1 is Pₒᵤₜ₁ = 1.2 and output optical intensity from the output port 2 of the PBC 1 is Pₒᵤₜ₂ = 0.8. Thus, in the PBC 1, optical intensity from the LD 2a and optical intensity from the LD 2b are equally contained in pumping light emitted from each of the output ports 1 and 2. Therefore, even in a case where a pumping laser of either the LD 2a or the LD 2b fails, attenuation rates of pumping light to be made incident on the EDFAs 3a and 3b in Fig. 1B are the same. As a result, in designing of the optical communication system including an optical amplifier configuration, it is made easier to design a system in consideration of failure and time degradation of a pumping laser.

### (Second example embodiment)

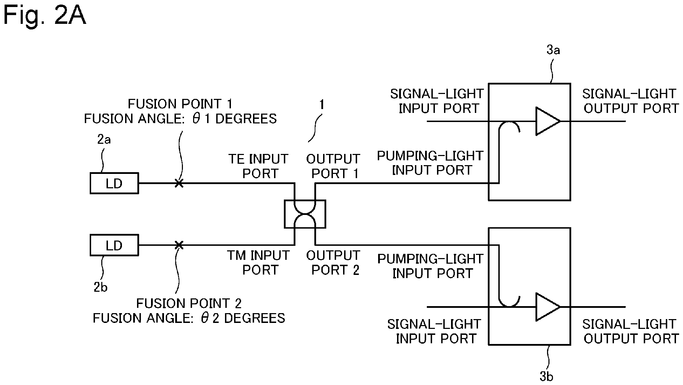

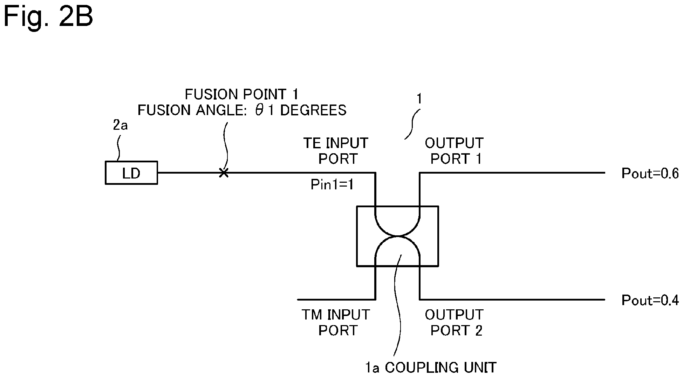

Next, a light source device and an optical amplifier according to a second example embodiment are described. Fig. 2A is a configuration diagram for illustrating the light source device and the optical amplifier according to the second example embodiment. Fig. 2B to Fig. 2D are explanatory diagrams for illustrating an operation of the light source device according to the second example embodiment. The second example embodiment is a modification example of the first example embodiment, and is based on the light source device illustrated in Fig. 1A. An element similar to an element in the first example embodiment is assigned with the same referential number, and detailed description thereof is omitted.

### (Configuration of example embodiment)

The optical amplifier in Fig. 2A includes a light source device similar to the light source device in Fig. 1A. Specifically, the light source device in Fig. 2A includes a laser diode (LD) 2a and a laser diode (LD) 2b as one example of a first light source and a second light source for outputting pumping light, and a polarized beam combiner (PBC) 1 in which a TE input port, a TM input port, an output port 1, and an output port 2 are included and the pumping light from the LD 2a and the LD 2b is input to a TE power port and the TM input port and multiplexed/demultiplexed. After performing multiplexing/demultiplexing on the pumping light emitted from the LD 2a and pumping light emitted from the LD 2b, the PBC 1 distributes the pumping light to a plurality of rare-earth-doped fibers of fiber type optical amplifiers.

The optical amplifier in Fig. 2A further includes an erbium-doped fiber type optical amplification unit (EDFA) 3a and an erbium-doped fiber type optical amplification unit (EDFA) 3b as one example of a first optical amplification unit and a second optical amplification unit for amplifying an optical signal by respectively using pumping light from the output port 1 and output port 2 of the PBC 1 of the light source device similar to the light source device of the optical amplifier in Fig. 1B. Note that, output fibers of the LDs 2a and 2b and fibers of the TE and TM input ports of the PBC 1 are both polarization maintaining fibers.

Further, in the optical amplifier in Fig. 2B, a fiber fusion angle between the LD 2a and the TE input port of the PBC 1 at a fusion point 1 is θ1 (degrees) that is not zero degrees or 90 degrees, and a fiber fusion angle between the LD 2b and the TM input port of the PBC 1 at a fusion point 2 is θ2 (degrees) that is not zero degrees or 90 degrees. In the other words, the output fiber of the LD 2a and the fiber of the TE input port of the PBC 1 are fused together at the fusion point 1, and an angle between slow-axes of the fusion-spliced fibers is θ1 (degrees). Further, the output fiber of the LD 2b and fiber of the TM input port of the PBC 1 are fused together at the fusion point 2, and an angle between slow-axes of the fusion-spliced fibers is θ2 (degrees). Note that, the fiber fusion angle θ1 being an angle between the LD 2a and TE input port of the PBC 1 at the fusion point 1 and the fiber fusion angle θ2 being an angle between the LD 2b and the TM input port of the PBC 1 at the fusion point 2 are different from each other.

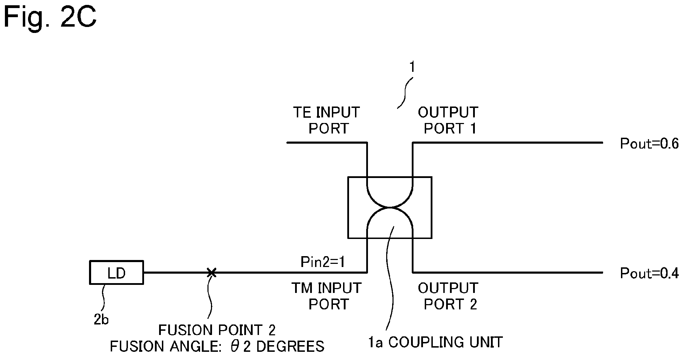

The PBC 1 includes a coupling unit 1a having a structure in which cores of two fibers are in close proximity of each other, which is illustrated in Figs. 2B and 2C, and thereby multiplexes/demultiplexes pumping light input to the TE and TM input ports. Intensity ratio of pumping light emitted from the two output ports of the PBC 1 can be varied by design of the coupling unit 1a. Specifically, a distance between the cores in close proximity to each other in the coupling unit 1a, a length of a section in which the cores are in close proximity in the coupling unit 1a, refractive index and cross-sectional size of the cores in the coupling unit 1a, and refractive index of a cladding in the coupling unit 1a are used as parameters in designing.

In the EDFAs 3a and 3b, pumping light incident from the light source device on each pumping-light input port amplifies signal light incident on a signal-light input port, and the amplified signal light is output from a signal-light output port.

### (Operation of example embodiment)

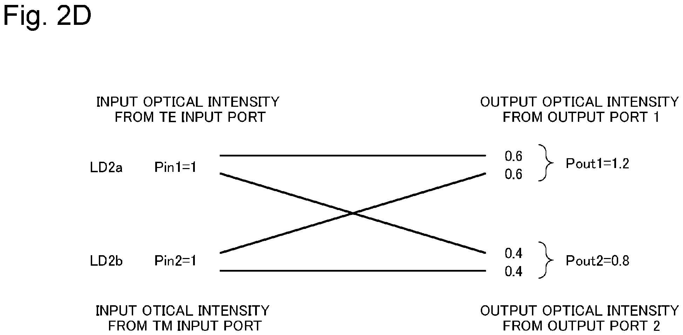

An operation of the optical amplifier and the light source device in Fig. 2A is described with reference to Figs. 2B, 2C, and 2D. The pumping light emitted from the LDs 2a and 2b is input to the input ports 1 and 2 of the PBC 1 and is multiplexed/demultiplexed, and then input to each pumping-light input port of the EDFAs 3a and 3b. On the other hand, an optical signal input to each signal-light input port of the EDFAs 3a and 3b is amplified, in the EDFAs 3a and 3b, by power of the pumping light, and output from each signal-light output port.

As illustrated in Fig. 2B, with regard to the pumping light input from the LD 2a to the TE input port of the PBC 1, distribution is performed at a ratio of 0.6:0.4, and the distributed pumping light is emitted from the output ports 1 and 2 of the PBC 1. Specifically, with regard to optical intensity Pᵢₙ₁ = 1 to the TE input port of the PBC 1, distribution is performed in such a way that optical intensity from the output port 1 of the PBC 1 is Pₒᵤₜ = 0.6 and optical intensity from the output port 2 is Pₒᵤₜ = 0.4.

As illustrated in Fig. 2C, with regard to the pumping light input from the LD 2b to the TM input port of the PBC 1, distribution is performed at a rate of 0.6:0.4, and the distributed pumping light is emitted from the output ports 1 and 2 of the PBC 1. Specifically, with regard to optical intensity Pᵢₙ₂ = 1 to the TM input port of the PBC 1, distribution is performed in such a way that optical intensity from the output port 1 of the PBC 1 is Pₒᵤₜ = 0.6 and optical intensity from the output port 2 is Pₒᵤₜ = 0.4.

Thus, in the light source device according to the present example embodiment, pumping light having different optical intensities can be made incident on each of the EDFAs 3a and 3b of the optical amplifier in Fig. 2A. Pumping light having different optical intensities can be made incident to each of the EDFAs 3a and 3b of the optical amplifier in Fig. 2A as described above, and therefore, in an optical amplifier configured in such a way as to include a plurality of EDFAs, pumping light having optimal intensity can be made incident on each of the EDFAs.

When the distribution of the pumping light input from the LD 2a to the TE input port of the PBC 1 as illustrated in Fig. 2B and the distribution of the pumping light input from the LD 2b to the TE input port of the PBC 1 as illustrated in Fig. 2C are put together, the distribution is illustrated as in Fig. 2D. With regard to the input optical intensity Pᵢₙ₁ = 1 from the LD 2a to the TE input port of the PBC 1 and the input optical intensity Pᵢₙ₂ = 1 from the LD 2b to the TM input port of the PBC 1, output optical intensity from the output port 1 of the PBC 1 is Pₒᵤₜ₁ = 1.2 and output optical intensity from the output port 2 of the PBC 1 is Pₒᵤₜ₂ = 0.8. Thus, in the PBC 1, optical intensity from the LD 2a and optical intensity from the LD 2b are equally contained in pumping light emitted from each of the output ports 1 and 2. Therefore, even in a case where a pumping laser of either the LD 2a or the LD 2b fails, attenuation rates of pumping light to be made incident on the EDFAs 3a and 3b in Fig. 2A are the same. As a result, in designing of an optical communication system including an optical amplifier configuration, it is made easier to design a system in consideration of failure of a pumping laser.

A ratio of pumping light power emitted from the two output ports of the PBC 1 can be varied not only by design of the coupling unit 1a of the PBC 1 as described in the first example embodiment but also by a fiber fusion angle with respect to each of the TE and TM ports of the PBC 1. Specifically, for example, the same operation as in the first example embodiment can be achieved by designing the fiber fusion angle θ1 between the LD 2a and the TE input port of the PBC 1 at the fusion point 1 and the fiber fusion angle θ2 between the LD 2b and the TM input port of the PBC 1 at the fusion point 2 in such a way as to be optimal.

### (Advantageous effect of example embodiment)

Thereby, in the light source device according to the present example embodiment, pumping light having different optical intensities can be made incident on each of the EDFAs 3a and 3b, in a similar way as in the first example embodiment. Pumping light having different optical intensities can be made incident to each of the EDFAs 3a and 3b of the optical amplifier in Fig. 2A as described above, and therefore, in an optical amplifier configured in such a way as to include a plurality of EDFAs, pumping light having optimal intensity can be made incident on each of the EDFAs.

When the distribution of the pumping light input from the LD 2a to the TE input port of the PBC 1 as illustrated in Fig. 2B and the distribution of the pumping light input from the LD 2b to the TE input port of the PBC 1 as illustrated in Fig. 2C are put together, the distribution is illustrated as in Fig. 2D. With regard to the input optical intensity Pᵢₙ₁ = 1 from the LD 2a to the TE input port of the PBC 1 and the input optical intensity Pᵢₙ₂ = 1 from the LD 2b to the TM input port of the PBC 1, output optical intensity from the output port 1 of the PBC 1 is Pₒᵤₜ₁ = 1.2 and output optical intensity from the output port 2 of the PBC 1 is Pₒᵤₜ₂ = 0.8. Thus, in the PBC 1, optical intensity from the LD 2a and optical intensity from the LD 2b are equally contained in pumping light emitted from each of the output ports 1 and 2. Therefore, even in a case where a pumping laser of either the LD 2a or the LD 2b fails, attenuation rates of pumping light to be made incident on the EDFAs 3a and 3b in Fig. 2A are the same. As a result, in designing of an optical communication system including an optical amplifier configuration, it is made easier to design a system in consideration of failure and time degradation of a pumping laser.

Next, an advantageous effect that is not achieved in the first example embodiment and is unique to the second example embodiment is described. As described above, an intensity ratio of pumping light emitted from the two output ports of the PBC 1 can be varied not only by design of the coupling unit 1a of the PBC 1 but also by design of a fiber fusion angle with respect to each of the TE and TM ports of the PBC 1. Pumping light having different optical intensities can be made incident on each of the EDFAs 3a and 3b of the optical amplifier in Fig. 2B by design of the fiber fusion angle with respect to each of the TE and TM input ports, and therefore, in an optical amplifier configured in such a way as to include a plurality of EDFAs, pumping light having optimal intensity can be made incident to each of the EDFAs.

According to the present example embodiment, a ratio of pumping light intensity is varied by design of a fiber fusion angle with respect to each of the TE and TM input ports while the already-existing and commercially available PBC 1 is used, and thereby it is also possible that pumping light having different optical intensities is made incident to each of the EDFAs 3a and 3b of the optical amplifier in Fig. 2A.

### (Other example embodiments)

While the desirable example embodiments have been described above, the present invention is not limited to those example embodiment and various changes are possible. In the first and second example embodiments, an output port of a polarized beam combiner (PBC) is directly connected to a pumping-light input port of an erbium-doped fiber type optical amplification unit (EDFA), but the present invention is not limited to this configuration. A similar advantageous effect can be achieved not only when the output port is directly connected but also when, for example, the output port of the PBC is connected to a branching coupler and the output from the branching coupler is connected to a plurality of the EDFAs.

Further, in the above-described first and second example embodiments, an example is described in which an erbium-doped fiber type optical amplifier is used as a rare-earth-doped fiber type optical amplifier, but a similar advantageous effect is expected for another fiber type of optical amplifier doped with another rare-earth element such as praseodymium (Pr), thulium (Tm), or ytterbium (Yb).

While the desirable example embodiments of the present invention have been described above, the present invention is not limited thereto. Various modifications may be applied within the scope of the invention described in the claims, and it is needless to say that those modifications are also included in the scope of the present invention.

### [Industrial Applicability]

An example of utilization of the present invention is an optical amplifier for relay in a long-distance optical communication system.

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims.

This application is based upon and claims the benefit of priority from Japanese patent application No. 2018-122973, filed on June 28, 2018, the disclosure of which is incorporated herein in its entirety by reference.

### [Reference signs List]

- 1: Polarized beam combiner
- 1a: Coupling unit
- 2a, 2b: Laser diode
- 3a, 3b: Erbium-doped fiber type optical amplification unit

## Claims

1. A light source device comprising:
a first light source and a second light source that output pumping light; and
a polarized beam combiner in which a first input port, a second input port, a first output port, and a second output port are included and the pumping light from the first light source and the second light source is input to the first input port and the second input port and multiplexed/demultiplexed.

2. The light source device according to claim 1, wherein
the first input port of the polarized beam combiner is a TE input port, and the second input port of the polarized beam combiner is a TM input port.

3. The light source device according to claim 2, wherein
an output fiber of the first light source and the TE input port of the polarized beam combiner are fusion-spliced, and an angle between slow-axes of fusion-spliced fibers is substantially zero degrees, and
an output fiber of the second light source and the TM input port of the polarized beam combiner are fusion-spliced, and an angle between slow-axes of fusion-spliced fibers is substantially 90 degrees.

4. The light source device according to claim 2, wherein
an output fiber of the first light source and the TE input port of the polarized beam combiner are fusion-spliced, and an angle between slow-axes of fusion-spliced fibers is θ1 degrees, and
an output fiber of the second light source and the TM input port of the polarized beam combiner are fusion-spliced, and an angle between slow-axes of fusion-spliced fibers is θ2 degrees.

5. The light source device according to claim 4, wherein
the θ1 degrees is an angle different from zero degrees, and the θ2 degrees is an angle different from 90 degrees.

6. An optical amplifier comprising:
the light source device according to any one of claims 1 to 5; and
a first optical amplification unit and a second optical amplification unit that amplify an optical signal by using the pumping light from the first output port and the second output port of the polarized beam combiner.
